# EUROPEAN PATENT APPLICATION

(11) **EP 4 787 834 A1**
(43) Date of publication of application: **05.08.2026**
(21) Application number: 24940550.7
(22) Date of filing: 21.12.2024
(51) Int. Cl.: H04N 13/332, H04N 5/265

(54) **BINOCULAR DISPLAY METHOD, BINOCULAR DISPLAY DEVICE, AND STORAGE MEDIUM**

(30) Priority: 09.05.2024 CN 202410570338; 31.05.2024 CN 202421242913 U
(71) Applicant: Shenzhen Yiwen Tech Limited, Shenzhen, Guangdong 518055 (CN)
(72) Inventor: CHANG, Zheng, Shenzhen, Guangdong 518055 (CN); OUYANG, Jian, Shenzhen, Guangdong 518055 (CN)
(74) Representative: Agca Kizil, Tugce
(86) International application number: PCT/CN2024/141255
(87) International publication number: WO 2025/232213

(57) **Abstract**

The present application relates to display device technologies and the field of display devices, and discloses a binocular display method, a binocular display device, and a storage medium. The method includes: obtaining first luminance distribution information of a first display module; obtaining second luminance distribution information of a second display module; determining a reference luminance parameter based on first luminance parameters and second luminance parameters; optimizing the first luminance parameters and the second luminance parameters based on the reference luminance parameter to obtain first target luminance distribution information and second target luminance distribution information; and controlling the first display module to perform display based on the first target luminance distribution information, and controlling the second display module to perform display based on the second target luminance distribution information.

## Description

The present application claims priority to Chinese Patent Application No. 202410570338.4 filed with the China National Intellectual Property Administration on May 09, 2024, and Chinese Patent Application No. 202421242913.X filed with the China National Intellectual Property Administration on May 31, 2024, the entire contents of which are incorporated herein by reference.

### Technical Field

The present application relates to the field of display devices, and in particular to a binocular display method, a binocular display device, and a computer-readable storage medium.

### Background Art

In the field of binocular display devices, the same images are output to the left and right eyes, respectively, through two different display modules (each including an optical engine and an optical waveguide sheet). Although the signals for outputting the image content are the same, the images presented to the left and right eyes may differ in optical performance such as luminance, uniformity, and chromatic aberration due to variations in optical design and implementation processes. Consequently, the luminance uniformity is relatively poor after the binocular display device performs binocular fusion, thus affecting the display effect of the binocular display device.

### Summary of the Invention

Embodiments of the present application provide a binocular display method, a binocular display device, and a computer-readable storage medium, to solve the problem of relatively poor luminance uniformity in image quality of existing binocular display devices, which results in a poor display effect of the binocular display devices.

In a first aspect, the present application provides a binocular display method, which is applied to a binocular display device including a first display module and a second display module. The method includes:
obtaining first luminance distribution information of the first display module, the first luminance distribution information including first luminance parameters of the first display module in each area of a first display region;
obtaining second luminance distribution information of the second display module, the second luminance distribution information including second luminance parameters of the second display module in each area of a second display region;
determining a reference luminance parameter based on the first luminance parameters and the second luminance parameters;
optimizing the first luminance parameters and the second luminance parameters based on the reference luminance parameter to obtain first target luminance distribution information and second target luminance distribution information; and
controlling the first display module to perform display based on the first target luminance distribution information, and controlling the second display module to perform display based on the second target luminance distribution information.

In a second aspect, the present application provides a binocular display device including a first display module, a second display module, a memory, and a processor, where the memory is configured to store a computer program; and the processor is configured to execute the computer program and, upon the execution of the computer program, implement the binocular display method as described above.

In a third aspect, the present application provides a computer-readable storage medium having stored therein a computer program that, when executed by a processor, causes the processor to implement the binocular display method as described above.

### Brief Description of the Drawings

To describe the technical solutions in the embodiments of the present application more clearly, the accompanying drawings for describing the embodiments are described briefly below. It is clear that the accompanying drawings in the following description illustrate some embodiments of the present application. Those of ordinary skill in the art will appreciate that other drawings may be derived from these accompanying drawings without requiring inventive effort.
FIG. 1 is a modular structure diagram of a binocular display device according to one or more embodiments of the present application;
FIG. 2 is a modular structure diagram of a binocular display device according to one or more embodiments of the present application;
FIG. 3 is a schematic structural diagram of a binocular display device according to one or more embodiments of the present application;
FIG. 4 is a schematic structural diagram of a binocular display device according to one or more embodiments of the present application;
FIG. 5 is a schematic structural diagram of a binocular display device according to one or more embodiments of the present application;
FIG. 6 is a modular structure diagram of a binocular display device according to one or more embodiments of the present application;
FIG. 7 is a schematic diagram of a scenario in which a binocular display device obtains binocular image information, according to one or more embodiments of the present application;
FIG. 8 is a schematic structural diagram of a binocular display device according to one or more embodiments of the present application;
FIG. 9 is a schematic structural diagram of a binocular display device according to one or more embodiments of the present application;
FIG. 10 is a schematic diagram of a scenario of the display of a first optical engine and a second optical engine in a binocular display device according to one or more embodiments of the present application;
FIG. 11 is a schematic diagram of a receiving cavity in a binocular display device according to one or more embodiments of the present application;
FIG. 12 is a schematic flowchart of steps of a binocular display method according to one or more embodiments of the present application;
FIG. 13 is a schematic diagram of an application scenario of a binocular display method according to one or more embodiments of the present application;
FIG. 14 is a diagram showing the display effect of a binocular display method according to one or more embodiments of the present application;
FIG. 15 is a diagram showing the display effect of a binocular display method according to one or more embodiments of the present application;
FIG. 16 is a diagram showing the display effect of a binocular display method according to one or more embodiments of the present application;
FIG. 17 is a diagram showing the display effect of a binocular display method according to one or more embodiments of the present application;
FIG. 18 is a diagram showing the display effect of a binocular display method according to one or more embodiments of the present application;
FIG. 19 is a diagram showing the display effect of a binocular display method according to one or more embodiments of the present application; and
FIG. 20 is a schematic structural block diagram of a binocular display device according to one or more embodiments of the present application.

### Detailed Description of Embodiments

The technical solutions in the embodiments of the present application will be described below with reference to the accompanying drawings in the embodiments of the present application. It is clear that the embodiments described are some, rather than all, of the embodiments of the present application. Based on the embodiments of the present application, other embodiments obtained by those of ordinary skill in the art without involving any inventive effort shall fall within the scope of protection of the present application. The flowcharts shown in the accompanying drawings are merely examples for description, but do not necessarily include all content or operations/steps, and the operations/steps are not necessarily performed in the order described. For example, some operations/steps may alternatively be split, combined, or partially combined, and therefore an actual order of execution may change depending on an actual situation. The foregoing descriptions are merely specific embodiments of the present application, and are not intended to limit the scope of protection of the present application. Any equivalent modifications or substitutions readily figured out by a person skilled in the art within the technical scope disclosed in the present application shall fall within the scope of protection of the present application. Therefore, the scope of protection of the present application shall be in accordance with the scope of protection of the claims.

Some implementations of the present application will be described in detail below with reference to the accompanying drawings. In the case of no conflict, the following embodiments and features in the embodiments may be combined with each other.

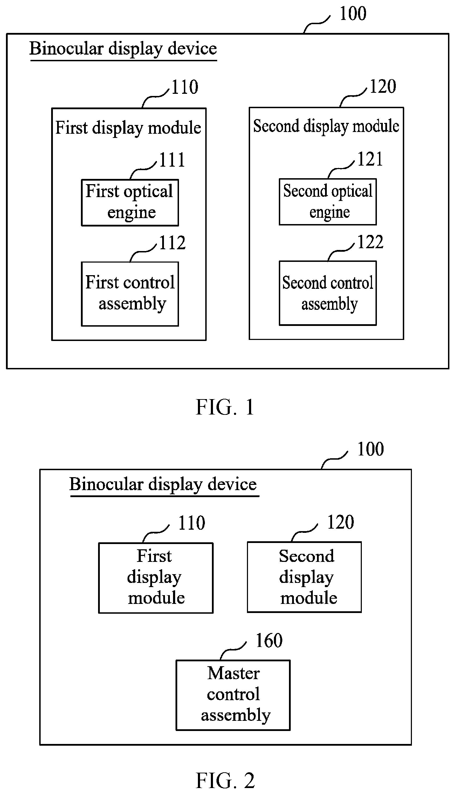

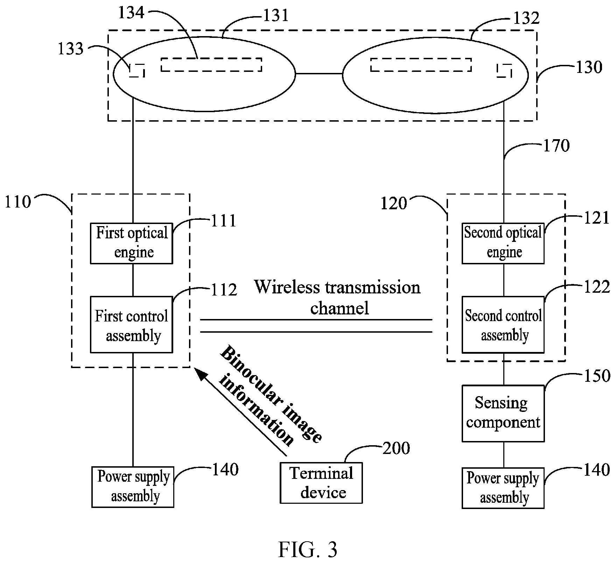

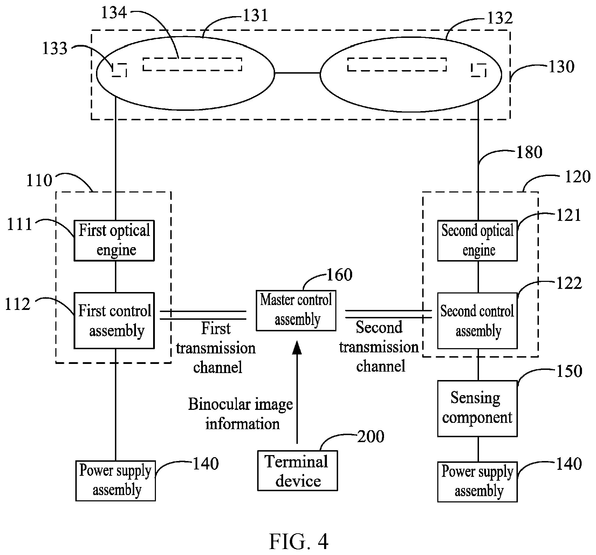

Referring to FIG. 1 to FIG. 4, FIG. 1 is a modular structure diagram of a binocular display device, FIG. 2 is another modular structure diagram of the binocular display device, FIG. 3 is a schematic structural diagram of the binocular display device, and FIG. 4 is another schematic structural diagram of the binocular display device.

As shown in FIG. 1 to FIG. 4, a binocular display device 100 according to an embodiment of the present application includes at least a first display module 110 and a second display module 120. Specifically, when a user uses the binocular display device 100, the first display module 110 and the second display module 120 correspond to the left and right eyes of the user, respectively. After receiving images from the first display module 110 and the second display module 120, the user fuses the two images.

Specifically, the binocular display device 100 includes, but is not limited to, AR glasses or VR glasses featuring binocular display, or other electronic devices capable of binocular display.

In some implementations, the first display module 110 includes a first optical engine 111 and a first control assembly 112 configured to control the first optical engine 111 to output image information, and the second display module 120 includes a second optical engine 121 and a second control assembly 122 configured to control the second optical engine 121 to output image information. A wireless communication connection is established between the first control assembly 112 and the second control assembly 122.

For example, the binocular display device 100 is AR glasses or VR glasses.

As shown in FIG. 1 and FIG. 3, in some implementations, a wireless communication connection is directly established between the first display module 110 and the second display module 120.

In some implementations, the first display module 110 includes a first optical engine 111 and a first control assembly 112 configured to control the first optical engine 111 to output image information, and the second display module 120 includes a second optical engine 121 and a second control assembly 122 configured to control the second optical engine 121 to output image information. A wireless communication connection is established between the first control assembly 112 and the second control assembly 122.

Specifically, the form of the wireless communication connection between the first display module 110 and the second display module 120 includes, but is not limited to, an ultra-wideband (UWB) connection, a Bluetooth low-energy (BLE) connection, or a Wi-Fi connection. For example, a proprietary 2.4G wireless protocol is provided between the first display module 110 and the second display module 120 to provide data transmission support for the first display module 110 and the second display module 120.

It should be noted that in binocular image information, first image information displayed on the first display module 110 and second image information displayed on the second display module 120 need to be displayed simultaneously to ensure that the user's eyes can correctly fuse the images. Therefore, the first display module 110 and the second display module 120 need to output a first optical signal and a second optical signal, respectively, at the same time instant.

Specifically, when the user wears and uses the binocular display device 100, the first display module 110 and the second display module 120 correspond to the left and right eyes of the user, respectively. After receiving the images from the first display module 110 and the second display module 120, the user fuses the two images.

It should be noted that a process of synchronously outputting the images by the first display module 110 and the second display module 120 is as follows: The binocular image information including the first image information for display on the first display module 110 and the second image information for display on the second display module 120 is received; the first image information is configured for the first display module 110, and the second image information is configured for the second display module 120. After the configuration is completed, the first display module 110 and the second display module 120 are controlled to display the image information synchronously, where the first display module 110 outputs the first optical signal corresponding to the first image information, and the second display module 120 outputs the second optical signal corresponding to the second image information.

It should also be noted that in all embodiments described in the specification of the present application, the term "synchronous/synchronously", including synchronous image display, optical signal output, and other phrases, refers to the relative consistency in the time dimension. For example, the term "synchronously" in "the optical signals synchronously output by the first display module 110 and the second display module 120" refers to the relative consistency in time instants of the optical signals output by the first display module 110 and the second display module 120. It should be understood that due to external interference in actual signal transmission, the relative consistency in the time instants of the optical signals output by the first display module 110 and the second display module 120 does not necessarily mean that they are output at exactly the same time; instead, there may be a time error of up to 1 microsecond when the first display module 110 and the second display module 120 synchronously output the optical signals.

For example, the binocular display device 100 according to embodiments of the present application includes AR glasses or VR glasses featuring binocular display.

Further, in the binocular display device 100, at least one of the first display module 110 and the second display module 120 may perform data transmission from or to a predetermined terminal device 200 to receive image information sent by the terminal device 200.

As shown in FIG. 2 and FIG. 4, in some implementations, the binocular display device 100 further includes a master control assembly 160. A wireless communication connection is established between the first control assembly 112 and the second control assembly 122 via the master control assembly 160. Specifically, a wireless communication connection is established between the master control assembly 160 and the first control assembly 112, and a wireless communication connection is established between the master control assembly 160 and the second control assembly 122.

The first display module 110 and the second display module 120 synchronize the time instants for displaying the optical signals through a first transmission channel, a second transmission channel, and the master control assembly 160.

For example, the first display module 110 generates time indication information, and then outputs the time indication information to the second display module 120 along a link from the first transmission channel through the master control assembly 160 to the second transmission channel, where the time indication information is used to indicate a time instant for outputting the first optical signal and the second optical signal. After the second display module 120 obtains the time information, the first display module 110 and the second display module 120 respectively output the first optical signal and the second optical signal at the time instant corresponding to the time indication information.

For another example, the master control assembly 160 is configured to control the first display module 110 and the second display module 120 to output the optical signals synchronously through the first transmission channel and the second transmission channel.

Specifically, the master control assembly 160 is configured to control the first display module 110 and the second display module 120 to output the optical signals synchronously through the first transmission channel and the second transmission channel. This prevents a timing mismatch between the imaging of the two display modules from causing improper fusion when the user is viewing the images displayed by the device, thereby improving the user experience.

For example, the master control assembly 160 controlling the first display module 110 and the second display module 120 to output the optical signals synchronously through the first transmission channel and the second transmission channel may be as follows: The master control assembly 160 generates first time indication information and second time indication information, and outputs the first time indication information to the first display module 110 through the first transmission channel and the second time indication information to the second display module 120 through the second transmission channel, where the first time indication information is used to indicate a time instant for outputting the first optical signal by the first display module 110, the second time indication information is used to indicate a time instant for outputting the second optical signal by the second display module 120, and the time instant for outputting the first optical signal is the same as the time instant for outputting the first optical signal.

Specifically, the form of the connection between the master control assembly 160 and the first display module 110 and/or the form of the connection between the master control assembly 160 and the second display module 120 includes, but is not limited to, a Bluetooth low-energy (BLE) connection or a Wi-Fi connection. For example, a proprietary 2.4G wireless protocol is provided between the first display module 110 and the second display module 120 to provide data transmission support for the first display module 110 and the second display module 120.

For example, at least one of the first control assembly 112, the second control assembly 122, and the master control assembly 170 includes: one of a central processing unit (CPU), another general-purpose processor, a digital signal processor, (DSP), an application-specific integrated circuit (ASIC), a field-programmable gate array (FPGA) or another programmable logic device, a discrete gate or transistor logic device, or a discrete hardware component.

For example, the first control assembly 112 in the first display module 110 may be mounted on a printed circuit board assembly (PCBA) and electrically connected to the first optical engine 111 to control the first optical engine 111. Similarly, the second control assembly 122 in the second display module 120 may be mounted on a printed circuit board assembly (PCBA) and electrically connected to the second optical engine 121 to control the second optical engine 121.

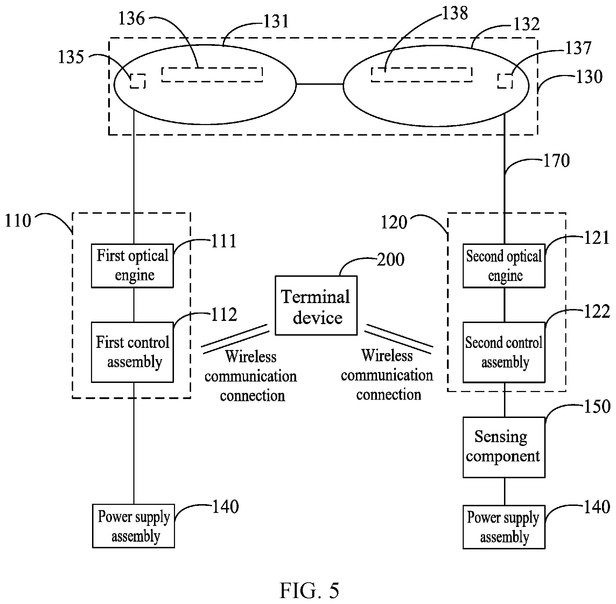

Referring to FIG. 5, FIG. 5 is another schematic structural diagram of the binocular display device.

As shown in FIG. 5, in some implementations, the binocular display device 100 is configured to adapt to an external terminal device 200. When the binocular display device 100 is adapted to the terminal device 200, a wireless communication connection is established between the first display module 110 and the terminal device 200, and a wireless communication connection is established between the second display module 120 and the terminal device 200.

The terminal device 200 is configured to control the first display module 110 and the second display module 120 to output optical signals synchronously.

Through the use of the terminal device 200 to control the first display module 110 and the second display module 120 to output the optical signals synchronously, this prevents a timing mismatch between the imaging of the two display modules from causing improper fusion when the user is viewing the images displayed by the device, thereby improving the user experience.

For example, the terminal device 200 controlling the first display module 110 and the second display module 120 to output optical signals synchronously through the first transmission channel and the second transmission channel may be as follows: The master control assembly 160 generates third time indication information and fourth time indication information, and outputs the third time indication information to the first display module 110 and the fourth time indication information to the second display module 120, where the third time indication information is used to indicate a time instant for outputting the first optical signal by the first display module 110, the fourth time indication information is used to indicate a time instant for outputting the second optical signal by the second display module 120, and the time instant for outputting the first optical signal is the same as the time instant for outputting the first optical signal.

It should be noted that compared with similar products currently available on the market that enable communicative interaction by providing a trace between the first display module 110 and the second display module 120 to achieve imaging synchronization, the binocular display device 100 according to the present application achieves a trace-free design by using any one of the following three optional configurations:
(1) a wireless communication connection being established between the first display module 110 and the second display module 120;
(2) a wireless communication connection being established between the master control assembly 160 and the master control assembly 160, and between the master control assembly 160 and the terminal device 200; or
(3) a wireless communication connection being established between the first display module 110 and the terminal device 200, and between the second display module 120 and the terminal device 200.

This achieves a trace-free design and results in a reduced size of the binocular display device 100.

Therefore, the binocular display device 100 according to the present application reduces size design requirements of the binocular display device 100 while ensuring imaging synchronization between the left and right sides of the binocular display device 100. This prevents a timing mismatch between the imaging of the two display modules from causing improper fusion when the user is viewing the images displayed by the device, thereby improving the user experience.

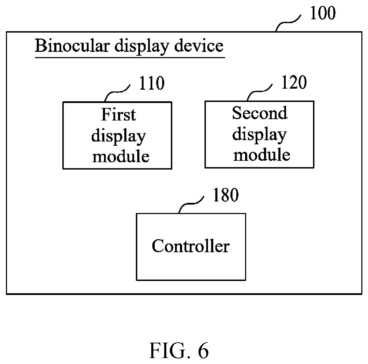

Referring to FIG. 6, FIG. 6 is another modular structure diagram of the binocular display device.

As shown in FIG. 6, the binocular display device 100 is further provided with a controller 180. The controller 180 is configured to control the binocular display device 100 to perform the binocular display method according to any one of the embodiments of the present application.

Specifically, the controller 180 may be independently provided within both the first display module 110 and the second display module 120, or may be distributed between the first display module 110 and the second display module 120, or may be independently provided outside the first display module 110 and the second display module 120.

In some implementations, when the controller 180 is distributed between the first display module 110 and the second display module 120, the controller 180 may be configured to include the first control assembly 112 and the second control assembly 122. For the specific configurations of the first control assembly 112 and the second control assembly 122, reference may be made to the implementations described above and the description with regard to FIG. 1 to FIG. 4.

In some other implementations, the controller 180 includes the first control assembly 112, the second control assembly 122, and the master control assembly 160. For the specific configurations of the first control assembly 112, the second control assembly 122, and the master control assembly 160, reference may be made to the implementations described above and the description with regard to FIG. 1 to FIG. 4.

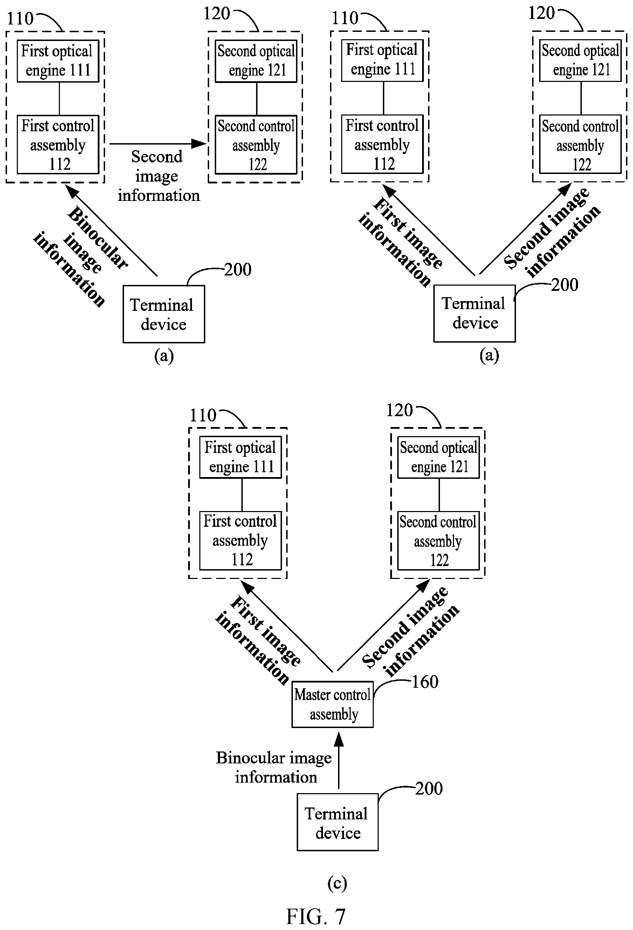

Referring to FIG. 7, FIG. 7 is a schematic diagram of a scenario of the binocular display device.

As shown in (a) of FIG. 7, in some implementations, one of the first display module 110 and the second display module 120 obtains binocular image information to be displayed, and then the display module having received the binocular image information transmits respective image information to the other of the first display module 110 and the second display module 120. The binocular image information includes the first image information for display on the first display module 110 and the second image information for display on the second display module 120.

For example, it is possible that only the first display module 110 is configured to be connected to the terminal device 200 and/or a sensing component 150 to obtain the binocular image information to be displayed, and then the first display module 110 sends the second image information in the binocular image information to the second display module.

As shown in (b) of FIG. 7, in some other implementations, the first display module 110 and the second display module 120 are each connected to the terminal device 200; the first display module 110 receives the first image information input by the terminal device 200, and the second display module 120 receives the second image information input by the terminal device 200.

As shown in (c) of FIG. 7, in some other implementations, the first display module 110 and the second display module 120 are each communicatively connected to the master control assembly 160, and the master control assembly 160 is communicatively connected to the terminal device 200, where the master control assembly 60 is further configured to receive the binocular image information, and transmit the first image information in the binocular image information to the first display module 110 and the second image information in the binocular image information to the second display module 120.

Specifically, the master control assembly 160 is connected to the external terminal device 200 and/or the sensing component 150 to obtain the binocular image information, and then sends the respective image information in the binocular image information to the first display module 110 and the second display module 120.

In some implementations, the first display module 110 includes a first optical engine 111 and a first control assembly 112 configured to control the first optical engine 111 to output an optical signal, and the first optical engine 111 is connected to a frame module 170 and disposed corresponding to an in-coupling grating region 133. The second display module 120 includes a second optical engine 121 and a second control assembly 122 configured to control the second optical engine 121 to output an optical signal, and the second optical engine 121 is connected to a frame module 170 and disposed corresponding to an in-coupling grating region 133.

A direct or indirect communication connection is established between the first control assembly 112 and the second control assembly 122.

For example, in the binocular display device 100 as shown in FIG. 3, a wireless transmission channel is established between the first control assembly 112 and the second control assembly 122.

For another example, in the binocular display device 100 as shown in FIG. 4, a first transmission channel is established between the first control assembly 112 and the master control assembly 160, and a second transmission channel is established between the second control assembly 122 and the master control assembly 160.

For still another example, in the binocular display device 100 as shown in FIG. 5, a wireless communication connection is established between the first control assembly 112 and the external terminal device 200, and a wireless communication connection is established between the second control assembly 122 and the external terminal device 200.

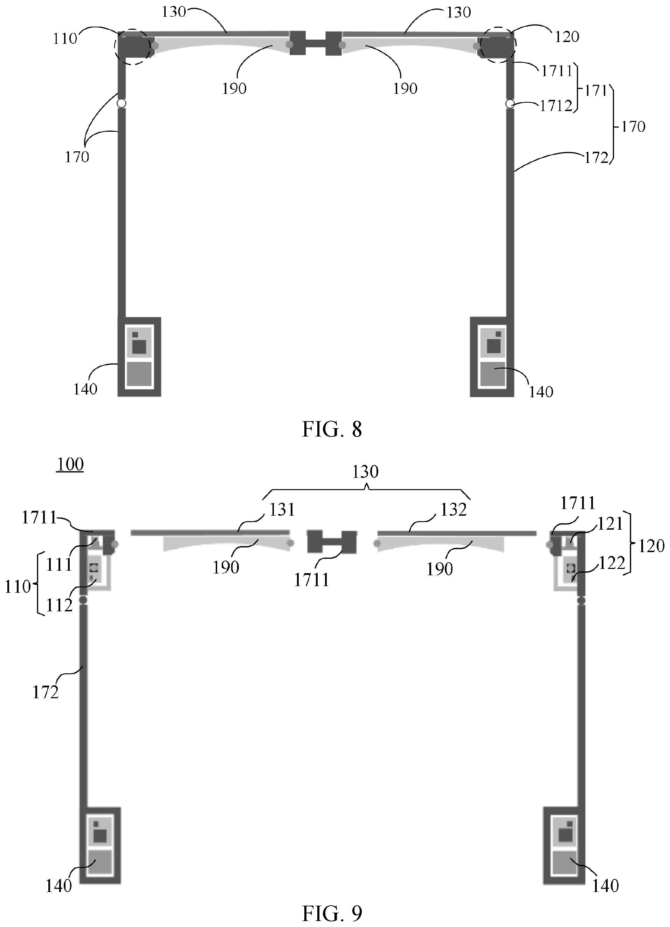

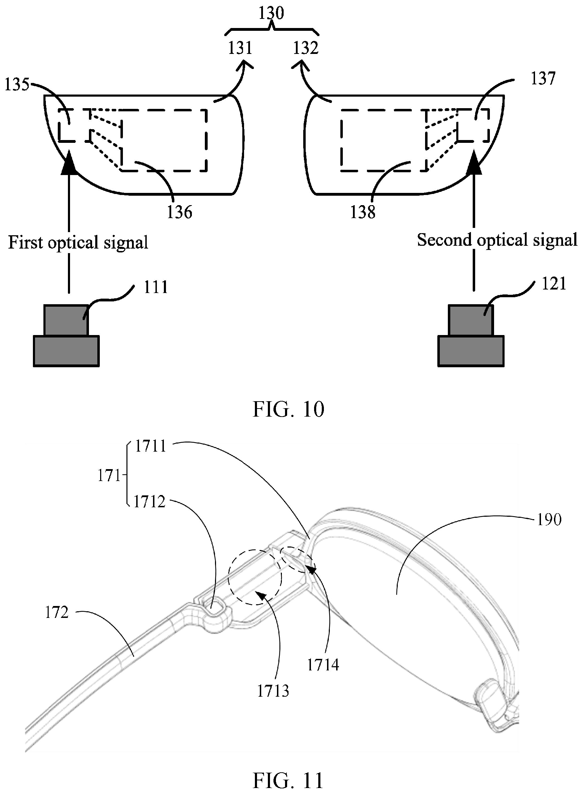

Referring to FIG. 8 to FIG. 10, FIG. 8 is another schematic structural diagram of the binocular display device, FIG. 9 is another schematic structural diagram of the binocular display device, and FIG. 10 is a schematic diagram of a scenario of the display of the first optical engine and the second optical engine in the binocular display device.

As shown in FIG. 8 to FIG. 10, in some implementations, the binocular display device 100 further includes a frame component 170, an optical waveguide lens 130, and a power supply component 140.

Specifically, the frame component 170 is at least configured to provide wearing support for a target object, and the first display module 110 and the second display module 120 are mounted in the frame component 170. The optical waveguide lens 130 is mounted on the frame component 170, and the optical waveguide lens 130 is provided with in-coupling grating regions 133 and out-coupling grating regions 134, the in-coupling grating regions 133 being disposed opposite to the first display module 110 and the second display module 120, where image signals input into the in-coupling grating regions 133 pass through the optical waveguide lens 130 and are output from the out-coupling grating regions 134. The power supply component 140 is mounted on the frame component 170, and is configured to supply power to the first display module 110 and the second display module 120.

The target object is a user who wears the binocular display device 100 according to the embodiments of the present application, and the frame module 170 is at least configured to provide wearing support for the user, and is further configured for mounting of the remaining components on the binocular display device 100.

Thus, the optical signals synchronously output by the first display module 110 and the second display module 120 propagate through the optical waveguide lens 130, and then are output from the out-coupling grating regions 134 and imaged at the same time in the user's field of view. This prevents a timing mismatch between the imaging of the two display modules from causing improper fusion when the user is viewing the images displayed by the device.

It should be noted that the binocular display device 100, for example, is AR glasses or VR glasses, allowing the user to wear it using the frame component 170 of the binocular display device 100, and all components other than the frame component 170 in the binocular display device 100 can be mounted on the frame component 170.

For example, the first display module 110 and the second display module 120 are accommodated in the frame module 170, and are disposed on opposite sides of the frame module 170.

In some implementations, the optical waveguide lens 130 includes a first lens component 131 and a second lens component 132 disposed on opposite sides of the frame component 170. When the user wears the binocular display device 100, the out-coupling grating regions 134 face the user's eyes, and image signals input by the first display module 110 and the second display module 120 into the in-coupling grating regions 133 pass through the optical waveguide lens 130, and are output from the out-coupling grating regions 134, and then projected into the user's field of view.

In some other implementations, the optical waveguide lens 130 includes an integral lens disposed on the frame component 170. When the user wears the binocular display device 100, the integral lens is located in front of the user's line of sight, while the out-coupling grating regions 134 are located on the integral lens.

Specifically, a first out-coupling grating region and a second in-coupling grating region are formed on the first lens component 131, and the first out-coupling grating region is disposed opposite to the first display module 110. A first out-coupling grating region and a second in-coupling grating region are formed on the first lens component 131, and the second out-coupling grating region is disposed opposite to the second display module 120. When the user wears the binocular display device 100, the first out-coupling grating region and the second out-coupling grating region are respectively opposite to the user's eyes. The image signal input by the first display module 110 into the first in-coupling grating region 133 passes through the optical waveguide lens 130 and is output from the first out-coupling grating region. Similarly, the image signal input by the second display module 120 into the second in-coupling grating region passes through the optical waveguide lens 130 and is output from the second out-coupling grating region. The image signals output from the first out-coupling grating region and the second out-coupling grating region are projected into the user's field of view.

As shown in FIG. 1 to FIG. 10, in some implementations, the frame module 170 includes:
a frame component 171, where the optical waveguide lens 130 is mounted on the frame component 171; and
temple components 172 connected to opposite sides of the frame component 171 in a first direction.

The first display module 110 and the second display module 120 are disposed on the opposite sides of the frame component 171 in the first direction, and the first display module 110 and the second display module 120 are connected to at least one of the frame component 171 and the temple components 172.

It should be additionally noted that the first direction refers to a width direction of the user's head when the user wears the binocular display device 100.

Specifically, the first display module 110 and the second display module 120 may be connected to the opposite sides of the frame component 171 in the first direction, or may be respectively connected to the temple components 172 on the opposite sides in the first direction.

In some implementations, the binocular display device 100 further includes a near-eye lens module 190. The near-eye lens module 190 is disposed on a side of the optical waveguide lens close to the temple components 172 and is detachably connected to the frame module 170.

Specifically, the near-eye lens module 190 is configured to adjust light rays entering the near-eye lens module 190 to meet the user's vision correction needs. For example, when the user requires vision correction, image frames output by the first display module 110 and the second display module 120 are transmitted through the optical waveguide lens 130 and projected into the near-eye lens module 190, while light rays incident into the binocular display device 100 from the outside pass through the optical waveguide lens 130 and are projected into the near-eye lens module 190, and then the near-eye lens module 190 adjusts the incoming optical signals such that the adjusted optical signals can reach the user's field of view.

In some implementations, the near-eye lens module 190 includes at least refractive lenses.

In some implementations, the near-eye lens module 190 includes refractive lenses with one flat surface and one concave surface.

Specifically, the flat surface of the refractive lenses faces the optical waveguide lens 130, and the concave surface of the refractive lenses faces away from the optical waveguide lens 130. It should be understood that the near-eye lens module 190 is configured to meet the user's need for myopia correction.

In some implementations, the near-eye lens module 190 includes refractive lenses with one flat surface and one convex surface.

Specifically, the flat surface of the refractive lenses faces the optical waveguide lens 130, and the convex surface of the refractive lenses faces away from the optical waveguide lens 130. It should be understood that the near-eye lens module 190 is configured to meet the user's need for hyperopia correction.

Further, the convex surface of the refractive lenses is flatter than the concave surface of the refractive lenses; that is, the flat surface of the refractive lenses facing the optical waveguide lens 130 exhibits a slight curvature.

It should be noted that the flat surface of the refractive lenses facing the optical waveguide lens 130 allows the dimension of the binocular display device 100 in the thickness direction of the near-eye lens module 190 to be further reduced, and facilitates control of the spacing between the refractive lenses and the optical waveguide lens 130 during production.

It should be understood that without the need for vision correction, the refractive lens in the near-eye lens module 190 can be replaced with plano lenses. In this case, the light rays from the outside and the image frames output by the first display module 110 and the second display module 120 are superimposed and then pass through the plano lenses into the user's field of view.

As shown in FIG. 8 and FIG. 9, in some implementations, the frame component 171 includes a lens mount 1711 and temple connectors 1712. The optical waveguide lens 130 is mounted on the lens mount 1711. The temple connectors 1712 are connected to opposite sides of the lens mount 1711 in the first direction, and the temple connectors 1712 are configured to be connected to the temple components 172 in an adapted manner.

It should be understood that the optical waveguide lens 130 is connected to the side of the lens mount 1711 away from the temple connectors 1712, and the image frames output by the display components are transmitted through the optical waveguide lens 130 and projected into the near-eye lens module 190, while the light rays incident into the binocular display device 100 from the outside pass through the optical waveguide lens 130 and are projected into the near-eye lens module 190, and then the near-eye lens module 190 adjusts the incoming optical signals such that the adjusted optical signals can reach the user's field of view. Therefore, when the user wears the binocular display device 100, the light rays incident into the binocular display device 100 from the outside and the image frames output by the display components are transmitted through the optical waveguide lens 130 and then enter the user's field of view together.

In some implementations, the lens mount 1711 is a metal piece.

It should be noted that for similar products currently available on the market that enable communicative interaction by providing a trace between the first display module 110 and the second display module 120, a housing for wrapping the trace, such as a plastic housing, is further required; moreover, the trace and the housing are usually disposed at the front end of the lens mount (on the side away from the user), making the products bulky in size and structure, and unattractive in appearance.

Compared with the similar products currently available on the market, the binocular display device 100 according to the present application achieves a trace-free design by providing a wireless communication connection between the first display module 110 and the second display module 120, which results in a reduced size of the binocular display device 100. In addition, with the trace-free design, the binocular display device 100 according to the present application no longer requires a housing to wrap the trace, which makes the binocular display device 100 more compact in size and structure, lighter in weight, and more attractive in appearance.

Referring to FIG. 11, FIG. 11 is a schematic diagram of a receiving cavity in the binocular display device.

As shown in FIG. 11, in some implementations, the frame component 171 is provided with receiving cavities 1713. The receiving cavities 1713 are disposed on opposite sides of the lens mount 1711 in the first direction and provided with openings 1714 opposite to the in-coupling grating regions 133 of the optical waveguide lens 130, and the first display module 110 and the second display module 120 are accommodated in different receiving cavities 1713.

It should be noted that at least one of the lens mount 1711 and the temple connectors 1712 is provided with the receiving cavities 1713. For example, in FIG. 9, the receiving cavity 1713 is formed on a side of the lens mount 1711 close to the temple connector 1712. Specifically, the openings 1714 of the receiving cavities 1713 are opposite to the in-coupling grating regions 133 of the optical waveguide lens 130 and are configured to accommodate the first display module 110 and the second display module 120, such that the image frames output by the first display module 110 and the second display module 120 can pass through the openings 1714 accurately into the in-coupling grating regions 133 of the optical waveguide lens 130.

Specifically, the receiving cavities 1713 are disposed on opposite sides of the lens mount 1711 to respectively accommodate the first display module 110 and the second display module 120.

Further, in addition to the first display module 110 and second display module 120, the receiving cavities 1713 are further configured to accommodate components such as the master control assembly 160 and the sensing component 150 disclosed in the embodiments of the present application.

As shown in FIG. 3 to FIG. 5, in some implementations, the binocular display device 100 according to the embodiments of the present application is further provided with the sensing component 150 for detecting the device's own pose or the user's wearing condition.

For example, the sensing component 150 includes, but is not limited to, a gyroscope, a contact sensor, a gravity sensor (G-sensor), a microphone (mic) sensor, a photosensitive sensor, a proximity sensor, a camera, a ToF sensor, etc., where the gyroscope is configured to detect the amounts of displacement and rotation of the binocular display device 100. For example, the sensing component 150 includes, but is not limited to, a short-range inductive sensor. The short-range inductive sensor is configured to detect the user's wearing condition.

In some implementations, the sensing component 150 is connected to the first display module 110, in which case the sensing component 150 is configured to detect pose information of the binocular display device 100 and send the pose information to the first display module 110.

In some other implementations, the sensing component 150 is connected to the second display module 120, in which case the sensing component 150 is configured to detect pose information of the binocular display device 100 and send the pose information to the second display module 120.

In still other implementations, the sensing component 150 is connected to the master control assembly 160, in which case the sensing component 150 is configured to detect pose information of the binocular display device 100 and send the pose information to the master control assembly 160.

In some implementations, the sensing component 150 is disposed on the same side as at least one of the first display module 110 and the second display module 120 on the frame module 170; and the sensing component 150 is electrically connected to the display module disposed on the same side as the sensing component, and is configured to transmit pose information to the display module disposed on the same side as the sensing component.

For example, the sensing component 150 is disposed on the same side as the first display module 110, and the sensing component 150 is connected to the first display module 110, in which case the sensing component 150 is configured to detect pose information of the binocular display device 100 and send the pose information to the first display module 110.

For another example, the sensing component 150 is disposed on the same side as the second display module 110 and the sensing component 150 is connected to the second display module 120, in which case the sensing component 150 is configured to detect pose information of the binocular display device 100 and send the pose information to the second display module 120.

For still another example, the sensing component 150 may be configured to be electrically connected to the master control assembly 160, in which case the sensing component 150 is configured to detect pose information of the binocular display device 100 and send the pose information to the master control assembly 160.

In the above-described implementations, upon obtaining the pose information and image information to be compensated, at least one of the first display module 110, the second display module 120, and the master control assembly 160 is further configured to perform image compensation on the image information to be compensated based on the pose information, and display a compensated image or configure the compensated image on the first display module 110 and/or the second display module 120 for display.

The image information to be compensated includes, but is not limited to, first binocular image information, the first image information, and the second image information, and the first binocular image information includes the first image information and the second image information.

For example, when the sensing component 140 obtains the pose information of the binocular display device 100 and sends the pose information to the first display module 110, the first display module 110 performs image compensation on the first image information based on the pose information, and then the first display module 110 is further configured to send the pose information to the second display module 120, such that the second display module 120 performs image compensation on the second image information based on the pose information.

For example, when the sensing component 140 obtains the pose information of the binocular display device 100 and sends the pose information to the second display module 120, the second display module 120 performs image compensation on the second image information based on the pose information, and then the second display module 120 is controlled to send the pose information to the first display module 110, such that the first display module 110 performs image compensation on the first image information based on the pose information.

For example, with the sensing component 150 disposed on a side of the binocular display device 100 close to the first display module 110, it is also possible that the first display module 110 obtains the pose information and sends the pose information to the second display module 120. Alternatively, with the sensing component 150 disposed on a side of the binocular display device 100 close to the second display module 120, it is also possible that the second display module 120 obtains the pose information and sends the pose information to the first display module 110.

In some implementations, the first control assembly 112 in the first display module 110 has a greater computing power than the second control assembly 122 in the second display module 120. In other words, the first control assembly 112 is a master chip, and the second control assembly 122 is a slave chip.

Further, for the sensing component 150, when the sensing component 150 includes a low-latency sensor, such as a gyroscope, a G-Sensor, or a camera, the sensing component 150 is disposed on a side close to the first display module 110 and is connected to the first display module 110, such that the first display module 110 having a greater computing power performs image compensation on the image information to be compensated based on the pose information. This enables the display of the compensated image to be triggered faster with less delay, thereby further improving the viewing experience of the user.

In addition, when the sensing component 150 includes a high-latency sensor, such as a mic sensor or a proximity sensor, because such a sensor has no significant low-latency requirement, the sensing component 150 may be disposed on a side close to the second display module 120 and is connected to the second display module 120, such that the second display module 120 performs image compensation on the image information to be compensated based on the pose information.

In some implementations, the binocular display device 100 further includes the master control assembly 160 communicatively connected to the first display module 110 and the second display module 120 in a wireless manner. The sensing component 150 may be configured to be electrically connected to the master control assembly 160. The master control assembly 160 obtains the pose information detected by the sensing component 150, and controls the second display module 120 to perform image compensation on the first image information and the second image information based on the pose information. Thereafter, the compensated first image information is sent to the first display module 110, and the compensated second image information is sent to the second display module 120.

It should be noted that the above-described implementations are merely some examples of image compensation for the first image information and the second image information, and are not limitations on the position of the sensing component 150 and the entity for performing the image compensation.

In some implementations, the binocular display device 100 further includes a power supply component 140. The power supply component 140 is mounted on the frame module 170 and is electrically connected to the first display module 110 and the second display module 120, to supply power to the first display module 110 and the second display module 120.

For example, the power supply component 140 may include a rechargeable and/or detachable battery unit.

In some implementations, the frame module 170 includes a frame component 171 and temple components 172. The first display module 110 and the second display module 120 are mounted on the frame component 171, and front ends of the temple components 172 are connected to the frame component 171. The power supply component 140 is connected to the ends of the temple components 172 and is connected to the first display module 110 and/or the second display module 120 via electrical connection lines (not shown in the figures) accommodated in the temple components 172.

For example, it can be seen from FIG. 8 and FIG. 9 that the power supply component 140 is divided into two parts, distributed between the ends of the two temple components 172 of the binocular display device 100. In this case, the two parts of the power supply component 140 are respectively configured to supply power to the first display module 110 and the second display module 120. Alternatively, the power supply component 140 may be disposed at the end of only one temple component 172 of the binocular display device 100.

It should be noted that disposing the power supply component 140 at the end of the temple component 172 is intended to balance the overall weight distribution of the binocular display device 100, thereby improving the wearing experience of the user. It should also be noted that configuring the electrical connection lines to be accommodated in the temple components 172 can provide reliable and effective protection for the electrical connection lines, thereby improving the stability of the power supply component 140 in supplying power.

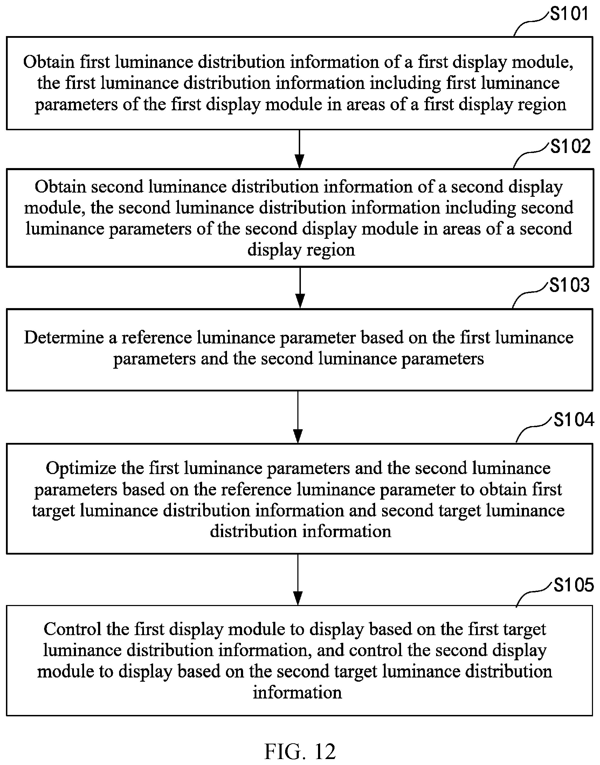

Referring to FIG. 12, FIG. 12 is a schematic flowchart of steps of a binocular display method.

An embodiment of the present application further provides a binocular display method. The binocular display method according to the embodiment of the present application is applied to the binocular display device 100.

It should be noted that the binocular display device 100 includes, but is not limited to, AR glasses or VR glasses featuring binocular display, or other electronic devices capable of binocular display. A specific implementation in which the binocular display method is applied to the binocular display device 100 is described below with reference to the binocular display device 100 according to the embodiments of the present application.

As shown in FIG. 6, the binocular display method specifically includes the following steps S101 to S105.

S101: Obtain first luminance distribution information of the first display module, the first luminance distribution information including first luminance parameters of the first display module in each area of a first display region.

The first display module 110 and the second display module 120 correspond to the left and right eyes of the user, respectively. After receiving the images from the first display module 110 and the second display module 120, the user fuses the two images. The first luminance distribution information is used to represent a luminance distribution of the first display module, and may include the first luminance parameters of the first display module 110 in the areas of the first display region. The first display region is a display region corresponding to the first display module 110. The first luminance parameters include actual display luminance in the areas of the first display region.

Specifically, actual display luminance of the first display module 110 coupled out of the optical waveguide may be detected to obtain the actual display luminance of the first display module 110 in the areas of the first display region, so as to generate the first luminance distribution information.

For example, the first luminance distribution information may be represented as Table 1.

**Table 1**

| | | | | |
|---|---|---|---|---|
| A11 | A12 | A13 | ... | A1n |
| A21 | A22 | A23 | ... | A2n |
| A31 | A32 | A33 | ... | A3n |
| ... | ... | ... | ... | ... |
| An1 | An2 | An3 | ... | Ann |

In this table, the first display region may be divided into n*n areas. The first luminance parameter (i.e., the display luminance) corresponding to the first area may be A11, the first luminance parameter corresponding to the second area may be A12, and so on.

S102: Obtain second luminance distribution information of the second display module, the second luminance distribution information including second luminance parameters of the second display module in each area of a second display region.

The second luminance distribution information is used to represent a luminance distribution of the second display module 120, and may include the second luminance parameters of the second display module 120 in the areas of the second display region. The second display region is a display region corresponding to the second display module 120. The second luminance parameters include actual display luminance in the areas of the second display region.

Specifically, actual display luminance of the second display module 120 coupled out of the optical waveguide may be detected to obtain the actual display luminance of the second display module 120 in the areas of the second display region, so as to generate the second luminance distribution information.

For example, the second luminance distribution information may be represented as Table 2.

**Table 2**

| | | | | |
|---|---|---|---|---|
| B11 | B12 | B13 | ... | B1n |
| B21 | B22 | B23 | ... | B2n |
| B31 | B32 | B33 | ... | B3n |
| ... | ... | ... | ... | ... |
| Bn1 | Bn2 | Bn3 | ... | Bnn |

In this table, the second display region may be divided into n*n areas. The second luminance parameter (i.e., the display luminance) corresponding to the first area may be B11, the second luminance parameter corresponding to the second area may be B12, and so on.

S103: Determine a reference luminance parameter based on the first luminance parameters and the second luminance parameters.

The reference luminance parameter may be a standard value used to adjust the display luminance, such that each first luminance parameter and its corresponding second luminance parameter are uniform in luminance.

In some embodiments, the first luminance parameters and their respective second luminance parameters are averaged based on an area correspondence between the first display region and the second display region to obtain reference luminance distribution information; and the reference luminance parameter is determined from the reference luminance distribution information. In this way, the reference luminance parameter can be accurately determined to facilitate subsequent adjustment to the first luminance distribution information and the second luminance distribution information.

The area correspondence between the first display region and the second display region is used to represent the correspondence between the areas of the first display region and the areas of the second display region. The reference luminance distribution information is used to represent a distribution of reference luminance parameters in the areas.

Specifically, based on the area correspondence between the first display region and the second display region, the display luminance in the areas of the first display region is traversed and the display luminance in the areas of the corresponding second display region is determined, and the display luminance in the areas of the first display region and the display luminance in the areas of the corresponding second display region are averaged to obtain the reference luminance distribution information composed of a plurality of luminance parameters; and the reference luminance parameter is determined from the reference luminance distribution information.

As shown in Tables 1 and 2, for example, A11 corresponds to B11, A12 corresponds to B12, and Ann corresponds to Bnn. First, the display luminance of A11 and the display luminance of B11 are determined, and then A11 and B11 are averaged to obtain C11; then, the display luminance of A12 and the display luminance of B12 are determined, and then A12 and B12 are averaged to obtain C12, and so on, until Ann and Bnn are averaged to obtain Cnn, thereby generating the reference luminance distribution information; and the reference luminance parameter is determined from the reference luminance distribution information.

For example, the reference luminance distribution information may be represented as Table 3.

**Table 3**

| | | | | |
|---|---|---|---|---|
| C11 | C12 | C13 | ... | C1n |
| C21 | C22 | C23 | ... | C2n |
| C31 | C32 | C33 | ... | C3n |
| ... | ... | ... | ... | ... |
| Cn1 | Cn2 | Cn3 | ... | Cnn |

In this table, the reference luminance parameter (i.e., the display luminance) corresponding to the first area may be C11, the reference luminance parameter corresponding to the second area may be C12, and so on.

It should be noted that the reference luminance parameter may be obtained by averaging the first luminance parameter and its corresponding second luminance parameter, by calculating the median of the first luminance parameter and its corresponding second luminance parameter, or by calculating the variance of the first luminance parameter and its corresponding second luminance parameter. Any value calculated based on the first luminance parameter and its corresponding second luminance parameter can be used as the reference luminance parameter, which is not specifically limited herein.

In some embodiments, an operating mode and/or environmental information corresponding to the binocular display device is obtained; and the reference luminance distribution information is filtered based on the operating mode and/or the environmental information to obtain the reference luminance parameter. In this way, the most suitable reference luminance parameter can be determined for luminance adjustment based on the operating mode and/or environmental information.

The operating mode may include a day mode, a night mode, etc. The environmental information may include luminance, volume, etc.

For example, the obtained operating mode corresponding to the binocular display device is the day mode. In this case, it can be determined that the environment is relatively bright. Therefore, a luminance parameter with relatively high luminance can be selected from the reference luminance distribution information as the reference luminance parameter.

For example, the obtained environmental information corresponding to the binocular display device includes luminance, and it is determined that the luminance at this time is greater than a preset luminance threshold. In this case, it can be determined that the environment is relatively bright. Therefore, the luminance parameter with relatively high luminance can be selected from the reference luminance distribution information as the reference luminance parameter.

For example, the obtained operating mode corresponding to the binocular display device is the night mode, the environmental information includes luminance, and it is determined that the luminance at this time is not greater than the preset luminance threshold. In this case, it can be determined that the environment is relatively dim. Therefore, the luminance parameter with relatively low luminance can be selected from the reference luminance distribution information as the reference luminance parameter.

For example, for luminance parameters C11, C12, C13, etc. respectively corresponding to the plurality of areas of the first display region and the second display region, one of the luminance parameters may be determined as the reference luminance parameter.

S104: Optimize the first luminance parameters and the second luminance parameters based on the reference luminance parameter to obtain first target luminance distribution information and second target luminance distribution information.

The first target luminance distribution information is first luminance distribution information after luminance adjustment, the first target luminance distribution information is first luminance distribution information after the luminance adjustment, and the second target luminance distribution information is second luminance distribution information after luminance adjustment.

In some embodiments, first luminance compensation parameters and second luminance compensation parameters are determined based on the reference luminance parameter, the first luminance parameters, and the second luminance parameters; the first luminance parameters are optimized based on the first luminance compensation parameters to obtain the first target luminance distribution information; and the second luminance parameters are optimized based on the second luminance compensation parameters to obtain the second target luminance distribution information. In this way, accurate luminance compensation can be performed on the first luminance parameters and the second luminance parameters to obtain the first target luminance distribution information and the second target luminance distribution information.

The first luminance compensation parameters may be the luminance to be compensated for the first luminance parameters, and the second luminance compensation parameters may be the luminance to be compensated for the second luminance parameters.

Specifically, the first luminance compensation parameters and the second luminance compensation parameters are determined based on the reference luminance parameter, the first luminance parameters, and the second luminance parameters; the corresponding first luminance parameters are optimized based on the first luminance compensation parameters to obtain the first target luminance distribution information through combination; and the corresponding second luminance parameters are optimized based on the second luminance compensation parameters to obtain the second target luminance distribution information through combination.

For example, if the reference luminance parameter is the luminance of C33, the first luminance compensation parameter of A11 and the second luminance compensation parameter of B11 may be determined based on the luminance of C33, the luminance of A11, and the luminance of B11; then, the first luminance compensation parameter of A12 and the second luminance compensation parameter of B12 may be determined based on the luminance of C33, the luminance of A12, and the luminance of B12, and so on, until the luminance compensation parameters of all the areas have been determined; and finally, the corresponding first luminance parameters optimized based on the first luminance compensation parameters, to obtain the first target luminance distribution information through combination, and then the corresponding second luminance parameters are optimized based on the second luminance compensation parameters, to obtain the second target luminance distribution information through combination.

In some embodiments, parameter differences between the reference luminance parameter and the first luminance parameters are determined to obtain the first luminance compensation parameters; and parameter differences between the reference luminance parameter and the second luminance parameters are determined to obtain the second luminance compensation parameters. In this way, the luminance compensation parameters of the areas can be determined to facilitate adjustment to the luminance parameters.

For example, if the reference luminance parameter is the luminance of C33, a luminance difference between the luminance of C33 and the luminance of A11 may be used as the first luminance compensation parameter of A11, and a luminance difference between the luminance of C33 and the luminance of B11 may be used as the second luminance compensation parameter of B11; then, a luminance difference between the luminance of C33 and the luminance of A12 may be used as the first luminance compensation parameter of A12, a luminance difference between the luminance of C33 and the luminance of B12 may be used as the second luminance compensation parameter of B12, and so on, until the luminance compensation parameters of all the areas have been determined; and finally, the corresponding first luminance parameters are optimized based on the first luminance compensation parameters, to obtain the first target luminance distribution information through combination, and then the corresponding second luminance parameters are optimized based on the second luminance compensation parameters, to obtain the second target luminance distribution information through combination.

It should be noted that if the reference luminance parameter is the luminance of C33, the first luminance compensation parameter of A11 may be determined based only on the luminance difference between the luminance of C33 and the luminance of A11, or may be determined based on all of the luminance of C33, the luminance of A11, and the luminance of B11, provided that the average of the compensated luminance of A11 and the compensated luminance of B11 is the luminance of C33.

S105: Control the first display module to perform display based on the first target luminance distribution information, and control the second display module to perform display based on the second target luminance distribution information.

Specifically, controlling the first display module 110 to perform display based on the first target luminance distribution information and controlling the second display module 120 to perform display based on the second target luminance distribution information can result in a consistent average of the first luminance parameters in the areas of the first display region and the second luminance parameters in the areas of the corresponding second display region, such that a uniform display image is obtained after the fusion of the images output by the first display module 110 and the second display module 120. This improves the luminance uniformity in image quality of the binocular display device, reduces the difficulty in designing and producing the optical waveguide while improving the display effect of the binocular display device, and improves the wearing experience of the user.

In some embodiments, a first display parameter corresponding to the first display module is determined based on the first target luminance distribution information, and a second display parameter corresponding to the second display module is determined based on the second target luminance distribution information; the first display module is controlled to perform display based on the first display parameter; and the first display module is controlled to perform display based on the second display parameter. In this way, the display parameters can be adjusted such that a uniform display image is obtained after the fusion of images output by the first display module 110 and the second display module 120.

The first display parameter is an output display parameter adjusted by the first control assembly 112 in the binocular display device 100, and the second display parameter is an output display parameter adjusted by the second control assembly 122 in the binocular display device 100.

Specifically, the first display parameter corresponding to the first control assembly 112 is determined based on the first target luminance distribution information, and the second display parameter corresponding to the second control assembly 122 is determined based on the second target luminance distribution information; the first display module 110 is controlled to perform display based on the first display parameter; and the first display module 120 is controlled to perform display based on the second display parameter.

In some embodiments, after the first luminance parameters and the second luminance parameters are optimized based on the reference luminance parameter to obtain the first target luminance distribution information and the second target luminance distribution information, a grating parameter corresponding to a grating in the first display module is determined based on the first target luminance distribution information; and a grating parameter corresponding to a grating in the second display module is determined based on the second target luminance distribution information. In this way, the grating parameters can be adjusted such that a uniform display image is obtained after the fusion of images output by the first display module 110 and the second display module 120.

The grating parameter includes one or more of a grating groove depth, a grating tilt angle, a lateral dimension, or a refractive index. The grating in the first display module corresponds to a grating in the first out-coupling grating region, and the grating in the second display module corresponds to a grating in the second out-coupling grating region.

For example, one or more of the grating groove depth, the grating tilt angle, the lateral dimension, or the refractive index corresponding to the grating in the first display module are determined based on the first target luminance distribution information; and one or more of the grating groove depth, the grating tilt angle, the lateral dimension, or the refractive index corresponding to the grating in the second display module are determined based on the second target luminance distribution information. The gratings are adjusted such that the uniform display image can be obtained after the fusion of the images output by the first display module 110 and the second display module 120.

In some embodiments, a first display parameter and a grating parameter corresponding to the first display module are determined based on the first target luminance distribution information; and a second display parameter and a grating parameter corresponding to the first display module are determined based on the second target luminance distribution information. In this way, the display parameters and the grating parameters can be adjusted such that a uniform display image is obtained after the fusion of images output by the first display module 110 and the second display module 120.

Specifically, one or more of the grating groove depth, the grating tilt angle, the lateral dimension, or the refractive index corresponding to the grating in the first display module and the first display parameter corresponding to the first control assembly 112 are determined based on the first target luminance distribution information; and one or more of the grating groove depth, the grating tilt angle, the lateral dimension, or the refractive index corresponding to the grating in the second display module and the second display parameter corresponding to the second control assembly 122 are determined based on the second target luminance distribution information. In this way, both the display parameters and the grating parameters are adjusted such that the uniform display image can be obtained after the fusion of the images output by the first display module 110 and the second display module 120.

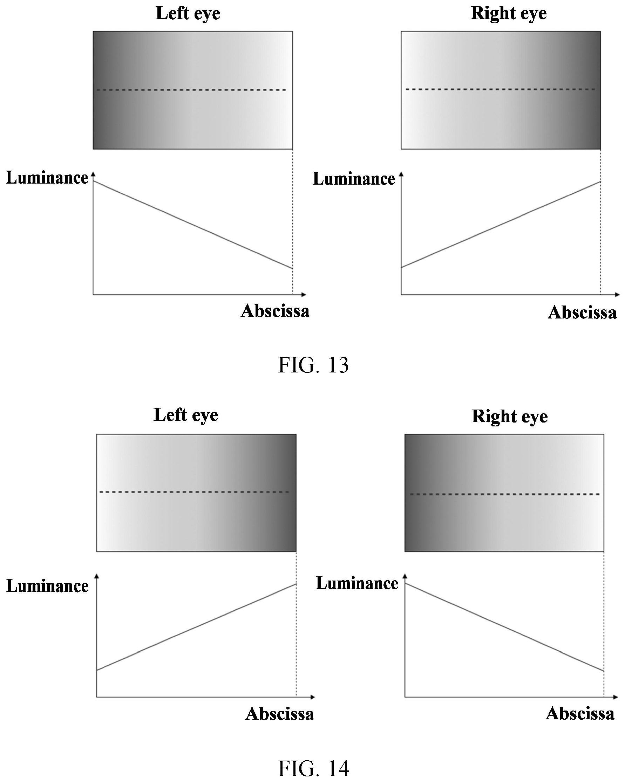

As shown in FIG. 13 and FIG. 14, with the binocular display method according to the present application, the problem of luminance non-uniformity of the first display module 110 and the second display module 120 in a horizontal direction can be addressed, such that a uniform display image can be obtained after the fusion of the images output by the first display module 110 and the second display module 120.

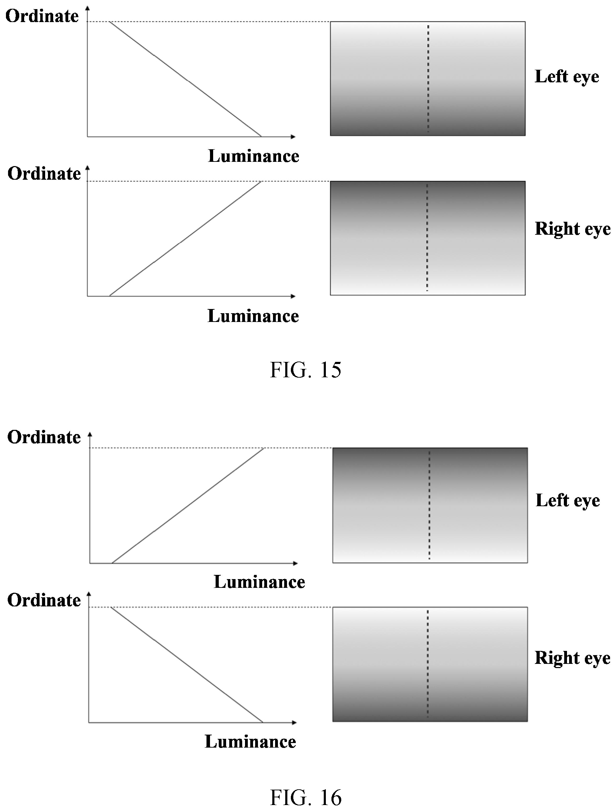

As shown in FIG. 15 and FIG. 16, with the binocular display method according to the present application, the problem of luminance non-uniformity of the first display module 110 and the second display module 120 in a vertical direction can be addressed, such that a uniform display image can be obtained after the fusion of the images output by the first display module 110 and the second display module 120.

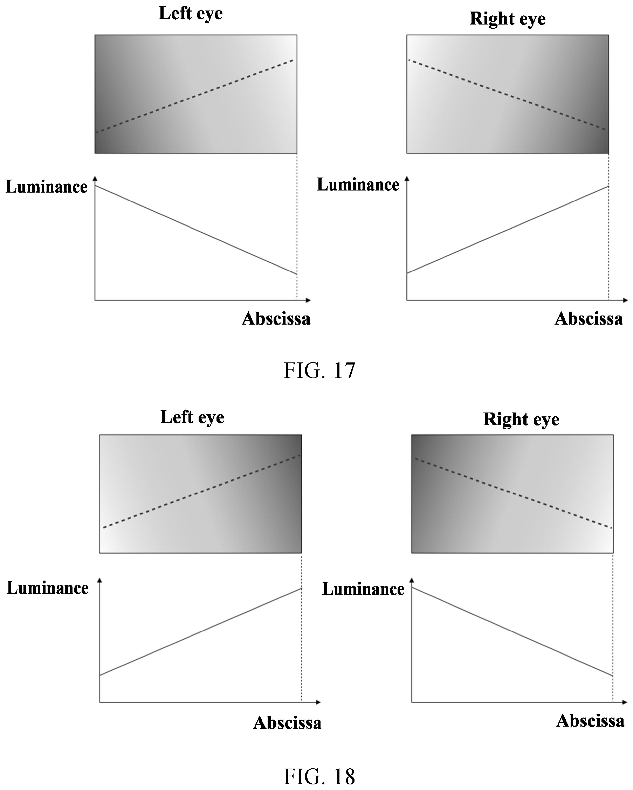

As shown in FIG. 17 and FIG. 18, with the binocular display method according to the present application, the problem of luminance non-uniformity of the first display module 110 and the second display module 120 in an oblique direction can be addressed, such that a uniform display image can be obtained after the fusion of the images output by the first display module 110 and the second display module 120.

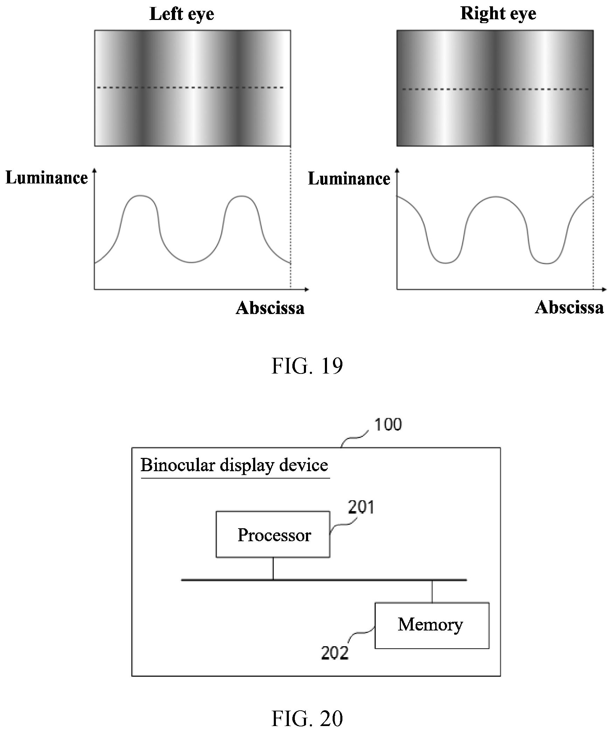

As shown in FIG. 19, with the binocular display method according to the present application, the problem of luminance non-uniformity of the first display module 110 and the second display module 120 in an irregular direction can be addressed, such that a uniform display image can be obtained after the fusion of the images output by the first display module 110 and the second display module 120.

Referring to FIG. 20, FIG. 20 is a schematic structural block diagram of a binocular display device 100 according to an embodiment of the present application.

As shown in FIG. 20, the binocular display device 100 may be an upper computer or a lower computer. The binocular display device 100 may include a processor 201 and a memory 202. The processor 201 is connected to the memory 202 through a bus, such as an inter-integrated circuit (I2C) bus.

In an example implementation, the processor 201 may be configured to provide computing and control capabilities to support the operation of the entire binocular display device 100. The processor 201 may be a central processing unit (CPU), or the processor 201 may be another general-purpose processor, a digital signal processor (DSP), an application-specific integrated circuit (ASIC), a field-programmable gate array (FPGA) or another programmable logic device, a discrete gate or transistor logic device, a discrete hardware component, etc. The general-purpose processor may be a microprocessor, or the processor may be any conventional processor, etc.

Specifically, the memory 202 may be a flash chip, a read-only memory (ROM) disk, an optical disc, a USB flash drive, a removable hard disk, etc.

Those skilled in the art can understand that the structure shown in FIG. 20 is merely a block diagram of part of the structure related to the solutions in the embodiments of the present application, and does not constitute a limitation on the terminal device to which the solutions in the embodiments of the present application are applied. Specifically, a server may include more or fewer components than those shown in the figure, or have some components combined, or have a different arrangement of components.

The processor 201 is configured to run a computer program stored in the memory and, upon the execution of the computer program, implement the binocular display method according to any one of the embodiments of the present application.

In an embodiment, the processor 201 is configured to run a computer program stored in the memory and, upon the execution of the computer program, implement the following steps: obtaining first luminance distribution information of the first display module, the first luminance distribution information including first luminance parameters of the first display module in each area of a first display region; obtaining second luminance distribution information of the second display module, the second luminance distribution information including second luminance parameters of the second display module in each area of a second display region; determining a reference luminance parameter based on the first luminance parameters and the second luminance parameters; optimizing the first luminance parameters and the second luminance parameters based on the reference luminance parameter to obtain first target luminance distribution information and second target luminance distribution information; and controlling the first display module to perform display based on the first target luminance distribution information, and controlling the second display module to perform display based on the second target luminance distribution information.

In an embodiment, the processor 201 is further configured to: average the first luminance parameters and their respective second luminance parameters based on an area correspondence between the first display region and the second display region to obtain reference luminance distribution information; and determine the reference luminance parameter from the reference luminance distribution information.

In an embodiment, the processor 201 is further configured to: obtain an operating mode and/or environmental information corresponding to the binocular display device; and filter the reference luminance distribution information based on the operating mode and/or the environmental information to obtain the reference luminance parameter.

In an embodiment, the processor 201 is further configured to: determine first luminance compensation parameters and second luminance compensation parameters based on the reference luminance parameter, the first luminance parameters, and the second luminance parameters; optimize the first luminance parameters based on the first luminance compensation parameters to obtain the first target luminance distribution information; and optimize the second luminance parameters based on the second luminance compensation parameters to obtain the second target luminance distribution information.

In an embodiment, the processor 201 is further configured to: determine parameter differences between the reference luminance parameter and the first luminance parameters to obtain the first luminance compensation parameters; and determine parameter differences between the reference luminance parameter and the second luminance parameters to obtain the second luminance compensation parameters.

In an embodiment, the processor 201 is further configured to: determine a first display parameter corresponding to the first display module based on the first target luminance distribution information, and determine a second display parameter corresponding to the second display module based on the second target luminance distribution information; control the first display module to perform display based on the first display parameter; and control the second display module to perform display based on the second display parameter.

In an embodiment, the processor 201 is further configured to: determine a grating parameter corresponding to a grating in the first display module based on the first target luminance distribution information; and determine a grating parameter corresponding to a grating in the second display module based on the second target luminance distribution information.

In an embodiment, the processor 201 is further configured to: determine a first display parameter and a grating parameter corresponding to the first display module based on the first target luminance distribution information; and determine a second display parameter and a grating parameter corresponding to the first display module based on the second target luminance distribution information.

It should be noted that it can be clearly understood by those skilled in the art that, for convenience and brevity of description, for the specific operation processes of the terminal device described above, reference may be made to the corresponding processes in the foregoing USB device access method embodiments, which will not be repeated herein.

An embodiment of the present application further provides a computer-readable storage medium. The computer-readable storage medium has stored therein a computer program including program instructions that, when executed by a processor, cause the binocular display method according to any one of the embodiments of the present application to be implemented.

For example, the program, when loaded by the processor, may execute the following steps:
obtaining first luminance distribution information of the first display module, the first luminance distribution information including first luminance parameters of the first display module in each area of a first display region; obtaining second luminance distribution information of the second display module, the second luminance distribution information including second luminance parameters of the second display module in each area of a second display region; determining a reference luminance parameter based on the first luminance parameters and the second luminance parameters; optimizing the first luminance parameters and the second luminance parameters based on the reference luminance parameter to obtain first target luminance distribution information and second target luminance distribution information; and controlling the first display module to perform display based on the first target luminance distribution information, and controlling the second display module to perform display based on the second target luminance distribution information.

The computer-readable storage medium may be an internal storage unit of a self-moving device in the foregoing embodiment, such as a hard disk or an internal memory of the self-moving device. Alternatively, the computer-readable storage medium may be an external storage device of the self-moving device, such as a plug-in hard disk, a smart media card (SMC), a secure digital card (SD card), or a flash card equipped on the self-moving device.

Further, the computer-readable storage medium may mainly include a program storage area and a data storage area. The program storage area may store an operating system, a program required by at least one function, etc. The data storage area may store data created based on each program, etc.

In summary, the present application provides the binocular display method, the binocular display device, and the computer-readable storage medium. The first luminance parameters in the first luminance distribution information of the first display module and the second luminance parameters in the second luminance distribution information of the second display module are obtained. The reference luminance parameter is determined based on the first luminance parameters and the second luminance parameters. The first luminance parameters and the second luminance parameters are optimized based on the reference luminance parameter to obtain the first target luminance distribution information and the second target luminance distribution information. The first display module is controlled to perform display based on the first target luminance distribution information, and the second display module is controlled to perform display based on the second target luminance distribution information. In this way, targeted adjustments can be made to the luminance distribution information of the first display module and the second display module, such that a uniform display image is obtained after the fusion of the images output by the first display module and the second display module. This improves the luminance uniformity in image quality of the binocular display device, reduces the difficulty in designing and producing the optical waveguide while improving the display effect of the binocular display device, and improves the wearing experience of the user.

Those of ordinary skill in the art can understand that all or some of the steps in the method and the functional modules/units in the system and apparatus disclosed above may be implemented as software, firmware, hardware, and appropriate combinations thereof. In a hardware embodiment, the division of the functional modules/units mentioned in the above description does not necessarily correspond to the division of physical components. For example, one physical component may have multiple functions, or one function or step may be jointly performed by several physical components. Some or all of the physical components may be implemented as software executed by a processor such as a central processing unit, a digital signal processor, or a microprocessor, or may be implemented as hardware or a setting circuit such as an application-specific integrated circuit. Such software may be distributed on a computer-readable medium, which may include a computer storage medium (or non-transitory medium) and a communication medium (or a transitory medium).

It should be understood that the terms used in the specification of the present application are only for the purpose of describing specific embodiments, and are not intended to limit the present application. Unless otherwise explicitly specified and defined, the terms such as "mounting", "connecting" and "connection" should be interpreted in a broad sense, for example, they may be a fixed connection, a detachable connection, or an integral connection; or may be a mechanical connection or an electrical connection; or may be a direct connection, an indirect connection by means of an intermediate medium, or internal communication between two elements. For those of ordinary skill in the art, the specific meaning of the terms mentioned above in the present application can be construed according to specific circumstances. As used in the specification and the appended claims of the present application, the singular forms "a", "an", and "the" are intended to include plural forms, unless otherwise explicitly specified in the context.

It should be further understood that the term "and/or" used in the specification and the appended claims of the present application indicates any combination and all possible combinations of one or more items listed in association, and includes the combinations. It should be noted that the term "comprise", "include", or any other variant thereof herein is intended to encompass a non-exclusive inclusion, such that a process, method, article, or system that includes a series of elements not only includes those elements, but also includes other elements not explicitly listed, or elements that are inherent to such a process, method, article, or system.

## Claims

1. A binocular display method, which is applied to a binocular display device comprising a first display module and a second display module, **characterized in that** the method comprises:
obtaining first luminance distribution information of the first display module, the first luminance distribution information comprising first luminance parameters of the first display module in each area of a first display region;
obtaining second luminance distribution information of the second display module, the second luminance distribution information comprising second luminance parameters of the second display module in each area of a second display region;
determining a reference luminance parameter based on the first luminance parameters and the second luminance parameters;
optimizing the first luminance parameters and the second luminance parameters based on the reference luminance parameter to obtain first target luminance distribution information and second target luminance distribution information; and
controlling the first display module to perform display based on the first target luminance distribution information, and controlling the second display module to perform display based on the second target luminance distribution information.

2. The binocular display method according to claim 1, **characterized in that** determining the reference luminance parameter based on the first luminance parameters and the second luminance parameters comprises:
averaging the first luminance parameters and their respective second luminance parameters based on an area correspondence between the first display region and the second display region to obtain reference luminance distribution information; and
determining the reference luminance parameter from the reference luminance distribution information.

3. The binocular display method according to claim 2, **characterized in that** determining the reference luminance parameter from the reference luminance distribution information comprises:
obtaining an operating mode and/or environmental information corresponding to the binocular display device; and
filtering the reference luminance distribution information based on the operating mode and/or the environmental information to obtain the reference luminance parameter.

4. The binocular display method according to claim 1, **characterized in that** optimizing the first luminance parameters and the second luminance parameters based on the reference luminance parameter to obtain the first target luminance distribution information and the second target luminance distribution information comprises:
determining first luminance compensation parameters and second luminance compensation parameters based on the reference luminance parameter, the first luminance parameters, and the second luminance parameters;
optimizing the first luminance parameters based on the first luminance compensation parameters to obtain the first target luminance distribution information; and
optimizing the second luminance parameters based on the second luminance compensation parameters to obtain the second target luminance distribution information.

5. The binocular display method according to claim 4, **characterized in that** determining the first luminance compensation parameters and the second luminance compensation parameters based on the reference luminance parameter, the first luminance parameters, and the second luminance parameters comprises:
determining parameter differences between the reference luminance parameter and the first luminance parameters to obtain the first luminance compensation parameters; and
determining parameter differences between the reference luminance parameter and the second luminance parameters to obtain the second luminance compensation parameters.

6. The binocular display method according to any one of claims 1 to 5, **characterized in that** controlling the first display module to perform display based on the first target luminance distribution information, and controlling the second display module to perform display based on the second target luminance distribution information comprise:
determining a first display parameter corresponding to the first display module based on the first target luminance distribution information, and determining a second display parameter corresponding to the second display module based on the second target luminance distribution information;
controlling the first display module to perform display based on the first display parameter; and
controlling the second display module to perform display based on the second display parameter.

7. The binocular display method according to any one of claims 1 to 5, **characterized in that** after optimizing the first luminance parameters and the second luminance parameters based on the reference luminance parameter to obtain the first target luminance distribution information and the second target luminance distribution information, the method further comprises:
determining a grating parameter corresponding to a grating in the first display module based on the first target luminance distribution information; and
determining a grating parameter corresponding to a grating in the second display module based on the second target luminance distribution information.

8. The binocular display method according to any one of claims 1 to 5, **characterized in that** after optimizing the first luminance parameters and the second luminance parameters based on the reference luminance parameter to obtain the first target luminance distribution information and the second target luminance distribution information, the method further comprises:
determining a first display parameter and a grating parameter corresponding to the first display module based on the first target luminance distribution information; and
determining a second display parameter and a grating parameter corresponding to the second display module based on the second target luminance distribution information.

9. A binocular display device, **characterized by** comprising a first display module, a second display module, a memory, and a processor, wherein
the memory is configured to store a computer program; and
the processor is configured to execute the computer program and, upon the execution of the computer program, implement the binocular display method according to any one of claims 1 to 8.

10. A computer-readable storage medium, **characterized in that** the computer-readable storage medium has stored therein a computer program that, when executed by a processor, causes the processor to implement the binocular display method according to any one of claims 1 to 8.
